Europäisches Patentamt

European Patent Office

Office européen des brevets

(11) Publication number: **0 146 380**
A2

# (12) EUROPEAN PATENT APPLICATION

(21) Application number: 84308787.5

(22) Date of filing: 17.12.84

(51) Int. Cl.⁴: **A 01 M 7/00**

(30) Priority: 20.12.83 GB 8333858

(43) Date of publication of application: 26.06.85 Bulletin 85/26

(84) Designated Contracting States: BE DE FR NL SE

(71) Applicant: **NATIONAL RESEARCH DEVELOPMENT CORPORATION, 101 Newington Causeway, London SE1 6BU (GB)**

(72) Inventor: **Nation, Harry James, 3 Elm Close, Campton Shefford Bedfordshire SG17 5PE (GB)**

(74) Representative: **Trevor-Briscoe, David William, Patent Department National Research Development Corporation 101 Newington Causeway, London SE1 6BU (GB)**

(54) Suspension assembly.

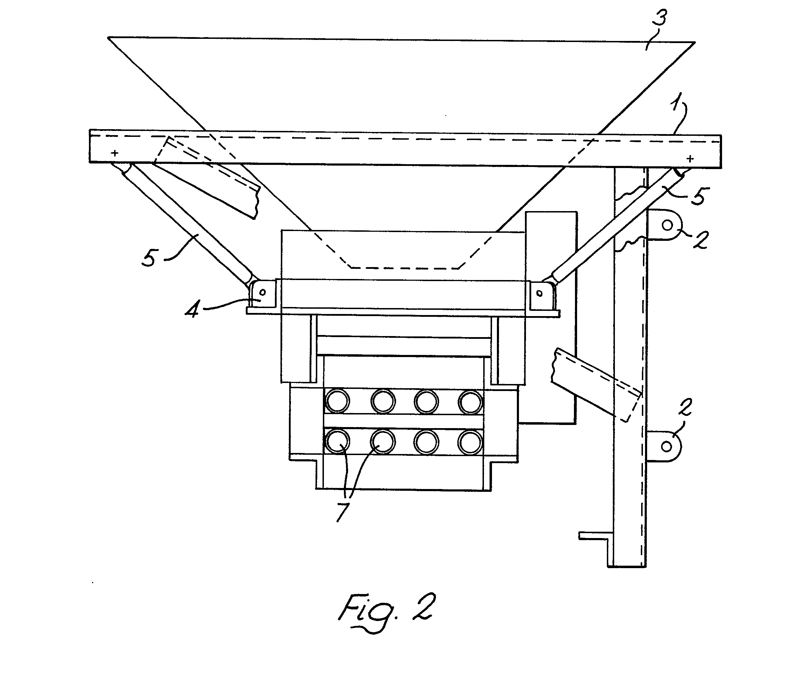

(57) The blowing, metering and distributing assembly 4 (Figure 2) of a liquid or air flows solids distributor and the extended distribution members are suspended from the chassis 1 by four downwardly converging rigid links 5, each having ball swivel joints 6 at its two ends. Due to the high polar inertia of the suspended assembly, it will not respond to transient yawing, rolling or pitching movements of the chassis but if such movements are sustained, the assembly will re-align to some new rest position. In other embodiments, the number and/or direction of convergence of the suspension links is varied from those shown in Figure 2. The assembly is particularly useful in certain types of agricultural machinery where the operative part of the machine has to be suspended from the body portion of the machine.

126058

## SUSPENSION ASSEMBLY

This invention relates to a suspension assembly and in particular to a suspension assembly aimed at providing stability for a first part of a machine when the main chassis of the machine is subjected to random and frequent rolling, yawing and pitching movements. It is particularly appropriate to some types of agricultural machine such as sprayers, spreaders, wick-type applicators, mowing machines, combine harvesters and spinning disc spreaders etc. where the operative part of the machine has to be suspended from the body portion of the machine.

It is already known from GB 2028078B (National Research Development Corporation) to improve the stability of a spray boom by supporting the boom on a pair of inclined links terminating in universal joints at both ends. This reduces the rolling and yawing motion of the boom. Pitching of the boom with respect to its carrying chassis is prevented by another pair of links attached one above the other to the centre of the boom.

Unfortunately, in some cases, the efficient functioning of this known stabilising system may be significantly reduced by the resistance to deflection of the various hoses and other connections which have to be made between the boom and the chassis. This is particularly true in the case of an air flow fertiliser or granule distributor, for example, where there may be more than a dozen tubes crossing the area of articulation.

According to the present invention, a suspension assembly comprises a first part of a machine suspended from a second part of the machine by three or more upwardly or downwardly converging rigid links each connected to each of the two parts by a ball joint or other multi-directional mechanical connection.

In one embodiment of the invention, where the machine is an agricultural sprayer or spreader for example, the suspended first part of the machine carries the metering and/or dividing and/or distributing mechanism and optionally also the reservior or hopper for the material to be distributed. It is an advantage of this embodiment that the various hoses and other connections previously

- 2 -

referred to are not required to flex with articulation of the suspended part. Thus the drawbacks of the previously known arrangement are avoided.

Where, as will usually be the case in practice, both the first and second parts are of a square or rectangular shape when viewed in plan, then there will conveniently be four said links arranged with their upper and lower ends in a similarly shaped configuration e.g. to support the second part at four corner regions of that part.

If the links converge upwardly, then the suspended assembly functions, at least for small displacements, as a pendulum in the rolling and pitching senses with appropriate raising of the centre of gravity providing a restoring force which urges the suspended first part towards the rest position of that part. Yawing movement also causes the centre of gravity to rise.

Similarly, if the links converge downwardly, then rolling, pitching and yawing movements will all raise the centre of gravity of the assembly and produce similar restoring forces on the suspended first part.

Where four, or possibly more, said links are provided, it is envisaged that it may be possible to have the links converging upwardly when viewed in a first vertical plane but converging downwardly when viewed in a second vertical plane lying at right angles to the first vertical plane. The behaviour of the suspended part in each of these planes will of course depend on the direction of convergence of the links in that plane and will be analogous to that already described above for the different types of convergence.

Whether upwardly and/or downwardly convergent links are used in the assembly of the present invention, the nature of the suspension is always to transmit to the suspended first part any long-term and sustained attitude changes of the supporting second part. Thus if the first part of the assembly carries a spray-boom or other material-distributing boom for example, the boom will remain aligned correctly to the ground, but short-term or transient attitudes of the chassis will not transmit to the suspended assembly. This means that, in operation, the effects of local asperities in the ground surface will not cause violent and magnified swings of the distributing boom.

The invention also includes a machine incorporating a suspension assembly according to the present invention and, in particular, but not exclusively, it includes a solids or liquids distribution machine having a distributor boom comprising or supported by said first part.

An embodiment of the invention will now be described, by way of example only, with reference to the accompanying drawings in which:-

Figures 1, 2 and 3 are simplified plan, side and rear views of an airflow solids distributor constructed in accordance with the present invention; and

Figures 4, 5 and 6 show simplified plan, side and rear views of an alternative embodiment.

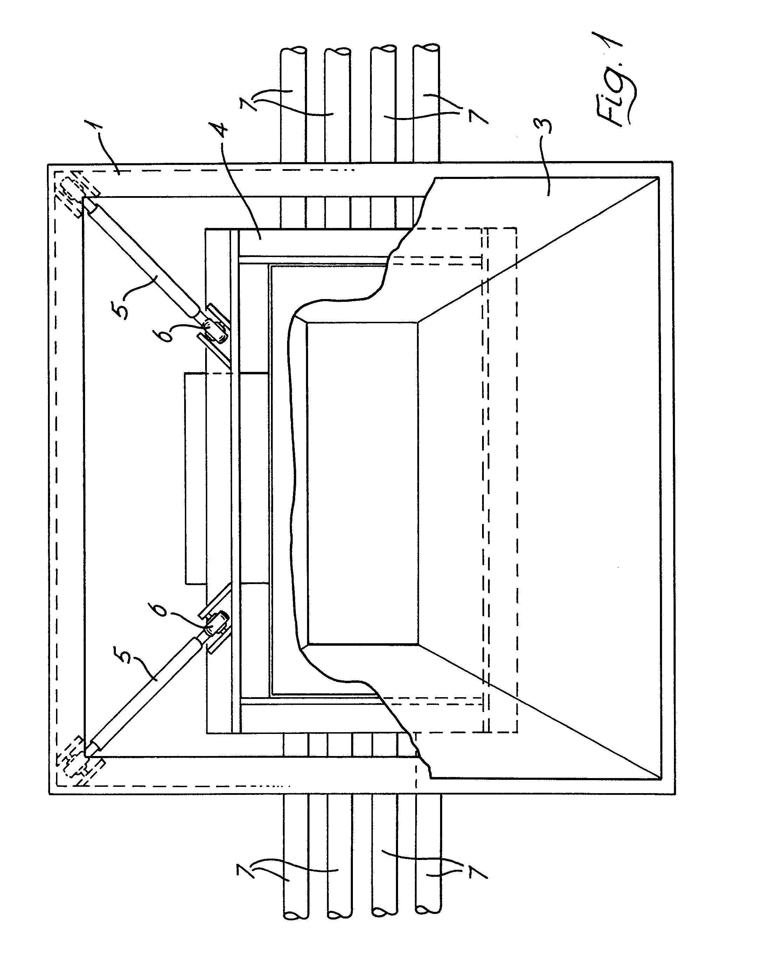

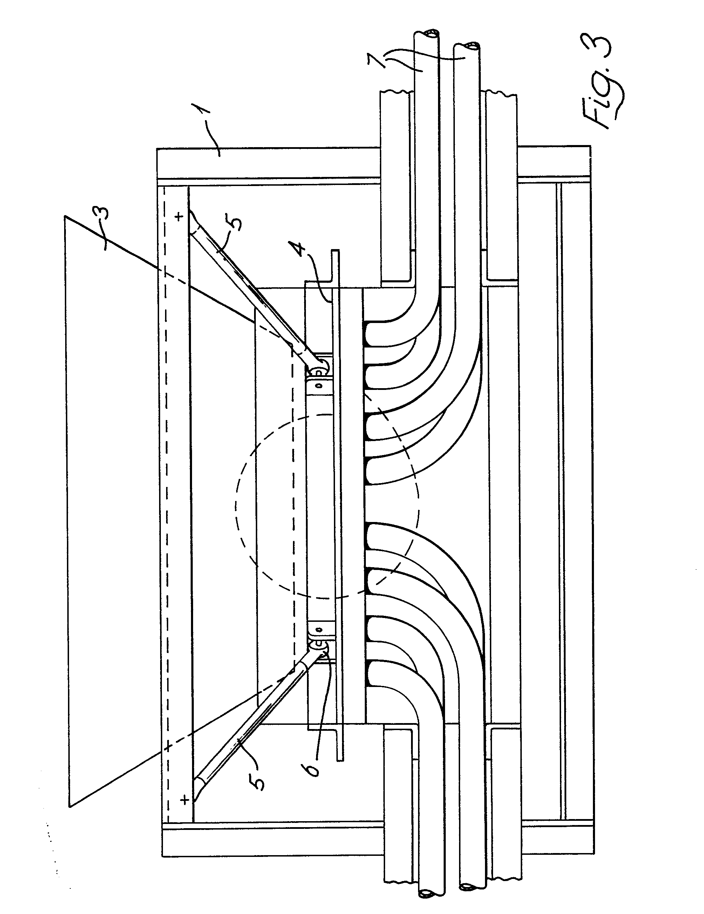

Thus referring first to Figures 1 to 3 of the drawings, the chassis 1 of the machine is illustrated as being tractor-mounted on a three-point linkage through attachments at 2 but it could alternatively be constructed as a trailed machine. The chassis is shown supporting a main hopper 3.

The blowing, metering and distributing assembly 4, which is not shown in detail, is suspended from the main chassis by four inclined links 5 each terminating at each end in universal or ball swivel joints 6. Extending to each side from the suspended assembly are the solids distributing tubes 7.

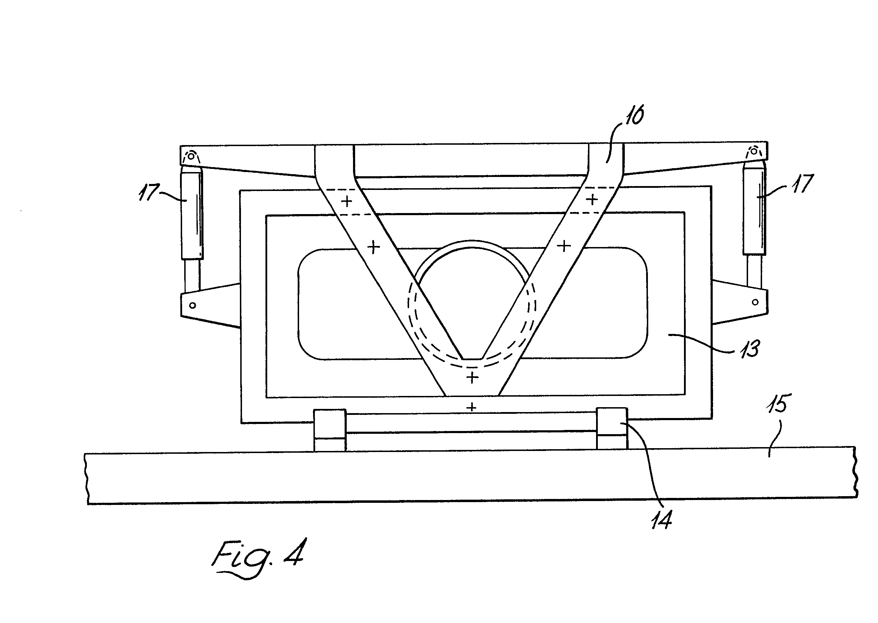

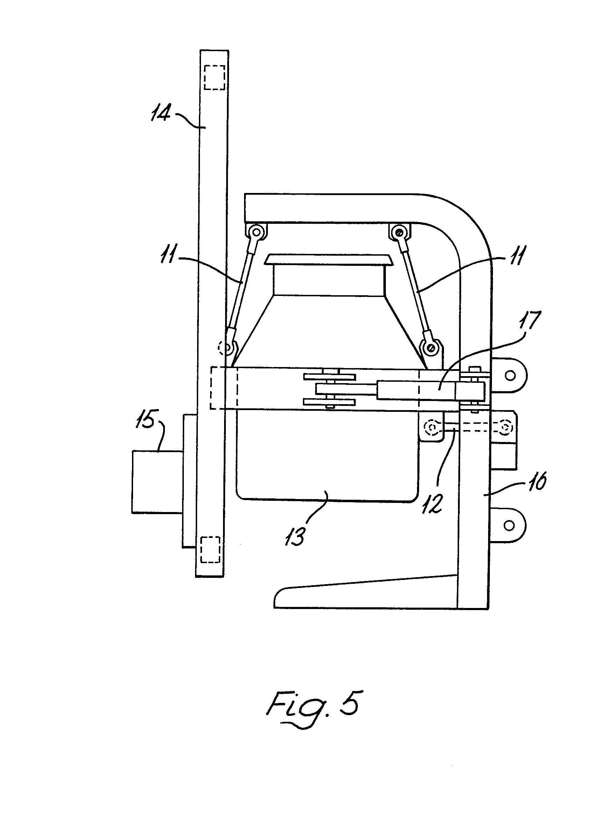

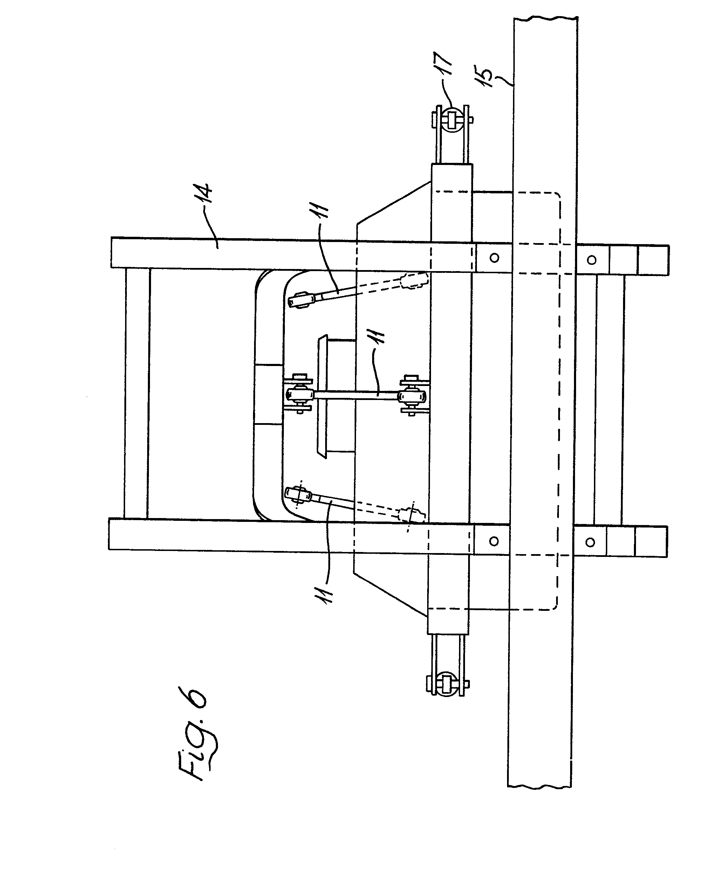

Figures 4, 5 and 6 show a sprayer according to a second embodiment of the invention in which three suspension links 11 are used in place of the four of the first embodiment.

A second difference is that these links converge upwardly rather than downwardly.

With the arrangement of Figures 4 to 6, it may also be convenient to include a horizontal link 12 to stabilise the sprayer in the horizontal direction without restraining the rolling or the yawing freedom.

- 4 -

The tank 13 of the sprayer is supported by the suspension links 11 as shown together with the upright 14 supporting the spray boom 15. In an alternative arrangement (not shown), the tank 13 is separately carried from the main frame 16.

In both the embodiments described above, and their modifications, it may be found advantageous in practice to have a small amount of viscous damping in one or more of the directions of movement afforded by the suspension and in the embodiment of Figures 4, 5 and 6 this is provided by a damper 17.

It should also be borne in mind that, if desired, any or all of the suspension links may be resiliently extensible and may incorporate damping elements effective in the directions of extension and contraction of the links.

In modifications (not shown) of the various embodiments illustrated, the upwardly converging links may be replaced by downwardly converging links and vice versa, appropriate repositioning and/or redimensioning of the different parts of the illustrated assemblies also being effected wherever necessary or desirable.

It will be understood that both in the illustrated embodiments and in their modifications, the rest position of the suspended part is in each case that which results in the lowest position for the centre of gravity of that part and any item or items supported thereby. Due to its high polar inertia, the suspension assembly of the present invention will not respond to transient yawing, rolling or pitching movements of the chassis but, if such movements are sustained, the assembly will re-align to some new rest position.

72B

- 5 -

## CLAIMS

1. A suspension assembly characterised in that it comprises a first part of a machine suspended from a second part of the machine by three or more upwardly or downwardly converging rigid links each connected to each of the two parts by a ball joint or other multi-directional mechanical connection.

2. A suspension assembly as claimed in Claim 1 characterised in that there are four or more said links and the links converge upwardly when viewed in a first vertical plane but converge downwardly when viewed in a second vertical plane lying at right angles to the first vertical plane.

3. A machine characterised in that it includes a suspension assembly as claimed in Claim 1 or Claim 2.

4. A solid or liquids distributor characterised in that it incorporates an assembly as claimed in Claim 1 or Claim 2 in which a distribution boom of the distributor comprises or is supported by said first part.

5. A sprayer, spreader, wick-type applicator, mowing machine, combine harvester, spinning disc spreader or like machine incorporating an assembly as claimed in Claim 1 or Claim 2.

72C

Fig. 1

0146380

Fig. 2

Fig. 3

Fig. 4

Fig. 5

Fig. 6

14

11

11

11

17

15

0146380